# EUROPÄISCHE PATENTANMELDUNG

(11) **EP 2 388 505 A2**
(43) Veröffentlichungstag der Anmeldung: **23.11.2011**
(21) Anmeldenummer: 11004019.3
(22) Anmeldetag: 16.05.2011
(51) Int. Cl.: F16L 59/135, F16L 3/10

(54) **Rohrschelle**

(30) Priorität: 17.05.2010 DE 202010006863 U
(71) Anmelder: Korff & Co. KG, 63128 Dietzenbach-Steinberg (DE)
(72) Erfinder: Rückert, Wilhelm, 63110 Rodgau (DE)
(74) Vertreter: Tergau & Walkenhorst

(57) **Zusammenfassung**

Rohrschelle mit einem aus zwei Halbschalen (1,2) gebildeten Ringkörper mit zwei Kontaktflächen (13,14) an jeder der beiden Halbschalen (1,2) derart, dass im Montageend-zustand die einander zugewandten Kontaktflächenpaare im Bereich der zwischen den Halbschalen (1,2) entstehenden Trennfugen (12) aneinander liegen, wobei jeweils mindestens eine Kontaktfläche (13,14) eines Kontaktflächenpaares ein elastisch verformbares Dichtelement (17) trägt.

## Beschreibung

Die Erfindung betrifft eine Rohrschelle zur Befestigung von Rohrleitungen an Wänden oder Decken. Derartige Rohrschellen bestehen in der Regel aus einem Ringkörper. Der Ringkörper ist seinerseits aus zwei jeweils als Ringsegment ausgebildeten Halbschalen zusammengesetzt. Dieser Ringkörper weist im Montageendzustand an den Kontaktflächen der beiden Hälften, jeweils eine Trennfuge auf, die durch Füllmaterial abgedichtet wird.

Als Füllmaterial werden Dichtungspasten verwendet, die unmittelbar vor der Montage der Schelle auf die Kontaktflächen der Halbschalen aufgetragen werden. Derartige Pasten müssen mehrere Eigenschaften aufweisen. Neben niedrigen Produktionskosten, langer Haltbarkeit und einfacher Handhabung werden je nach Verwendungszweck z.B. auch thermische Isolation oder Dichtigkeit gegen Wasserdampf gefordert. Der grundsätzliche Nachteil dieser Technik ist der manuelle Auftrag der Dichtpaste zur Abdichtung der Trennfugen durch den Monteur. Zu einen besteht das Risiko, dass die Abdichtung durch Fehler in der Handhabung nur unzureichend erfolgt oder gar ausgelassen wird, zum anderen bedingt diese Vorgehensweise hohe Arbeitskosten bei der Montage derartiger Rohrschellen.

Der Erfindung liegt deshalb die Aufgabe zugrunde, eine manuelle Abdichtung der Trennfugen durch den Monteur überflüssig zu machen. Durch die Entwicklung einer Rohrschelle mit der Merkmalskombination des Anspruchs 1 wurde diese Aufgabe in erfinderischer Weise gelöst. Die rückbezogenen Ansprüche betreffen teilweise vorteilhafte und teilweise für sich selbst erfinderische Weiterbildungen dieser Efindung.

Bei der erfindungsgemäßen Rohrschelle handelt es sich um einen aus zwei Halbschalen gebildeten Ringkörper. Im Montageendzustand verbleibt zwischen den beiden Kontaktflächenpaaren des Ringkörpers jeweils eine Trennfuge. Mindestens eine Kontaktfläche eines jeden Kontaktflächenpaares trägt ein verformbares Element, welches in der Trennfuge als Dichtung für das jeweilige Kontaktflächenpaar fungiert. Diese Dichtung ersetzt die bisher verwendete Dichtungspaste und kann als Teil des Fertigungsprozesses der Rohrschelle beim Hersteller maschinell angebracht werden. Der Hersteller kann dadurch auch die Qualität der Dichtungsmaterialien und deren fachgerechte Anbringung an der Rohrschelle überwachen. Handhabungsfehler durch den Monteur und Arbeitskosten durch manuelles Abdichten werden hierdurch vermieden.

Das verformbare Dichtelement kann sowohl aus elastisch verformbarem Material als auch aus plastisch verformbarem Material hergestellt sein. Hierdurch ist eine gute Anpassbarkeit des Dichtungsmaterials des Dichtelements an den jeweiligen speziellen Anwendungsfall möglich.

In bevorzugter Ausführungsform befinden sich Dichtelemente an allen vier Kontaktflächen, wobei vorzugsweise die Dichtelemente der beiden Kontaktflächen eines Kontaktflächenpaares versetzt zueinander angeordnet sind. Man kann auf diese Weise sicherstellen, dass die Beschädigung des Dichtelements an einer Kontaktfläche, beispielsweise durch den Transport, nicht zum Verlust der Dichtigkeit am entsprechenden Kontaktflächenpaar führt.

Als besondere Ausführungsform ist vorgesehen, dass eine Kontaktfläche pro Kontaktflächenpaar ein am Kontaktflächenrand angeordnetes äußeres Dichtelement trägt, während die jeweils andere Kontaktfläche ein im Mittenbereich der Fläche angeordnetes inneres Dichtelement aufweist. Im Montageendzustand soll dann das innere Dichtelement vom äußeren umgeben sein. Auf diese Weise wird eine doppelte Barriere zum Schutz vor eindringendem Kondenswasser von in die Rohrschelle integrierten Versteifungselementen geschaffen.

Als besonders vorteilhaft wird die einstückige und durchgängige Ausbildung der Dichtelemente angesehen, da die maschinelle Fertigung hierdurch leichter realisierbar ist.

Besonders vorteilhaft ist die Verwendung von Polyurethan-Dichtschaum als Material für die Dichtelemente, da dieser sehr gut verarbeitet werden kann und sehr gute Dichtwirkungen aufweist.

Als weitere bevorzugte Ausführungsform sind die Halbschalen der Rohrschelle aus Polyurethan-Hartschaum gefertigt. Dieses Material wirkt thermisch isolierend, wodurch die daraus bestehenden Rohrschellen zum Beispiel für die Leitungen von Klimaanlagen geeignet sind.

Insbesondere bei Verwendung von Polyurethan-Hartschaum für die Halbschalen und von Polyurethan-Weichschaum für die Dichteelemente können die Dichtelemente besonders gut und mit guter Dauerhaltbarkeit in einem Arbeitsgang auf die Kontaktflächen der Halbschalen aufgeschäumt oder aufgespritzt werden.

In einer besonderen Ausführungsform ist vorgesehen, dass zur Versteifung nach Art eines Skeletts in jede Halbschale ein Metallbügel integriert ist, an dem sich vorzugsweise Beschlagteile zur Anbringung von Befestigungselementen befinden. In Fällen mit vergleichsweise hoher Materialbelastung kann somit die Langlebigkeit der Rohrschellen sichergestellt werden. Da die Metallbügel nicht direkt mit der von der Rohrschelle umgriffenen Rohrleitung in Kontakt kommen, werden unerwünschte Wärmebrücken vermieden.

Besonders vorteilhaft ist der Einsatz eines Zweistufengewindes zur Befestigung eines Haltegestänges. Dabei befindet sich am Boden der ersten Gewindefassung die Öffnung einer zweiten Gewindefassung mit einem kleineren Innenradius. Auf diese Weise kann eine hohe Kompatibilität der Rohrschelle erreicht werden.

Anhand des Ausführungsbeispiels wird die Erfindung weiter beschrieben. Es zeigen:
- Fig. 1: einen Querschnitt der beiden Halbschalen einer erfindungsgemäßen Rohrschelle,
- Fig. 2: eine Seitenansicht eines Kontaktflächenpaares einer erfindungsgemäßen Rohrschelle gemäß Pfeil II in Fig. 1,
- Fig. 3: eine Draufsicht auf die beiden Kontaktflächen einer Halbschale mit erfindungsgemäßer Anordnung der Dichtelemente,
- Fig. 4: die beiden Kontaktflächen des Gegenstücks der in Fig. 3 gezeigten Halbschale.

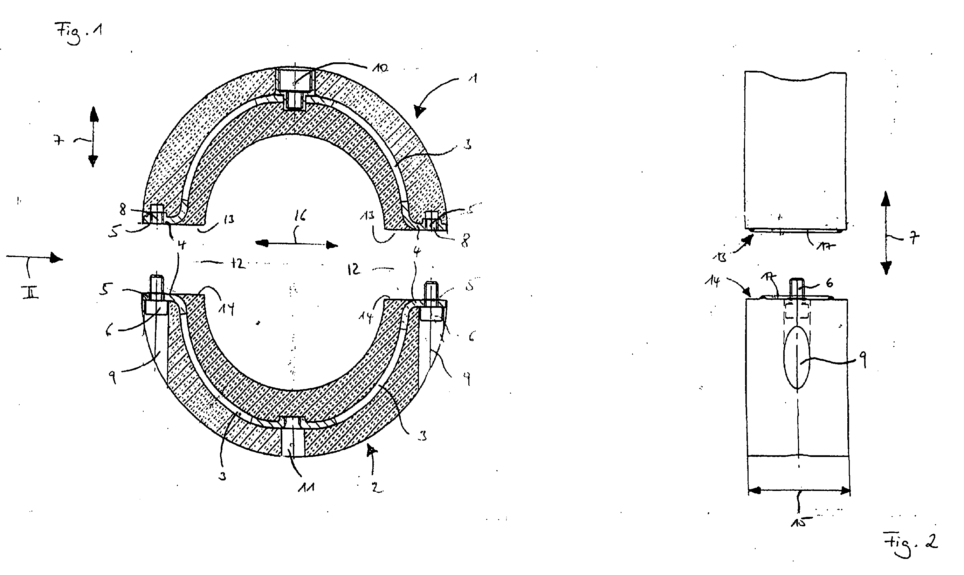

Die erfindungsmäßige in Fig. 1 dargestellte Rohrschelle besteht aus zwei Halbschalen 1,2, nämlich einer oberen Halbschale 1 und einer unteren Halbschale 2. Die obere Halbschale 1 und die untere Halbschale 2 sind im Ausführungsbeispiel symmetrisch aufgebaut. Beide Halbschalen 1,2 sind als Ringsegment ausgebildet und ergänzen einander zur ringförmigen Rohrschelle. In die Halbschalen 1,2 ist jeweils ein Metallbügel 3 integriert. Der Metallbügel 3 steift jede Halbschale 1,2 nach Art eines Skeletts aus.

Die Metallbügel 3 sind in ihrer Form der Kreissegmentform der Halbschalen 1,2 angepasst. Endseitig sind die Metallbügel 3 abgebogen. Die abgebogenen Bereiche der Metallbügel 3 bilden jeweils eine Montagelasche 4. Die Montagelaschen 4 sind jeweils von Laschenbohrungen 5 durchsetzt. In die Laschenbohrungen sind im Montageendzustand Befestigungsschrauben 6 eingebracht zur Befestigung der Halbschalen 1,2 aneinander. Beim Ausführungsbeispiel werden die Befestigungsschrauben 6 in Montagerichtung 7 durch die Laschenbohrungen 5 der unteren Halbschale 2 hindurchgesteckt und greifen in entsprechende Gegengewinde 8 in den Laschenbohrungen 5 der oberen Halbschale 1 ein. Durch das Einschrauben der Befestigungsschrauben 6 in die Gegengewinde 8 werden die untere Halbschale 2 und die obere Halbschale 1 zur Montage miteinander verschraubt.

In der unteren Halbschale 2 sind den Laschenbohrungen 5 der Metallbügel 3 Einführtrichter 9 vorgelagert, welche mit den Laschenbohrungen 5 in Montagerichtung 7 fluchten. Im Montageendzustand tauchen die Befestigungsschrauben 6 in diese Einführtrichter 9 vollständig ein, so dass die Schraubenköpfe der Befestigungsschrauben 6 im Montageendzustand in den Einführtrichtern 9 vollständig versenkt einliegen.

Die Halbschalen 1,2 bestehen im Ausführungsbeispiel aus Polyurethan-Hartschaum. Die Metallbügel 3 mit den Montagelaschen 4 sind vom Hartschaum-Material der Halbschalen 1,2 dabei vollständig umspritzt.

Die obere Halbschale 1 weist etwa in der Mitte ihres Halbkreisbogens ein Befestigungsgewinde 10 auf. In das Befestigungsgewinde 10 ist beispielsweise eine Haltestange eines Haltegestänges für die von der Rohrschelle umgebene Rohrleitung einschraubbar. Das Befestigungsgewinde 10 ist als Doppelgewinde ausgestaltet.

Auch die untere Halbschale 2 weist im Ausführungsbeispiel in der Mitte ihres Ringbogens eine Blindbohrung 11 auf, die ohne technische Funktion ist.

Die Halbschalen 1,2 liegen im Bereich ihrer gemeinsam ausgebildeten Trennfuge 12 mit ihren einander zugewandten Kontaktflächen 13,14 aneinander. Im Ausführungsbeispiel sind die Kontaktflächen 13 der oberen Halbschale 1 und die Kontaktflächen 14 der unteren Halbschale 2 zugeordnet. So bilden jeweils eine Kontaktfläche 13 der oberen Halbschale 1 und eine Kontaktfläche 14 der unteren Halbschale 2 ein Kontaktflächenpaar miteinander aus.

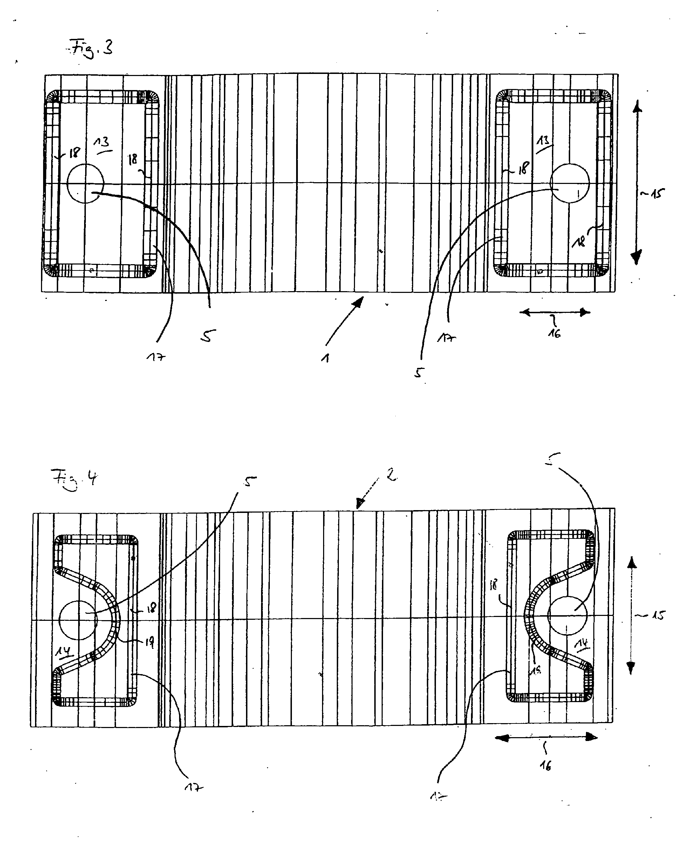

Die Ebene der Kontaktflächen 13,14 erstreckt sich jeweils - was in Fig. 3 und in Fig. 4 besonders gut erkennbar ist - in der zur Montagerichtung 7 senkrecht verlaufenden Querrichtung 15 einerseits und in der zur Querrichtung 15 und zur Montagerichtung 7 wiederum senkrecht verlaufenden Längsrichtung 16 andererseits. Die Querrichtung 15 und die Längsrichtung 16 spannen somit zwischen sich die Ebene der Kontaktflächen 13,14 auf.

Auf die Kontaktflächen 13,14 ist jeweils das erfindungsmäßige verformbare Dichtelement 17 aufgebracht. Fig. 3 zeigt ein rechteckförmiges, nahe den Randkanten der zugeordneten Kontaktfläche 13 der oberen Halbschale 1 aufgebrachtes Dichtelement 17. Fig. 4 zeigt ein grundsätzlich ebenfalls rechteckförmiges Dichtelement 17 auf den Kontaktflächen 14 der unteren Halbschale 2. Dieses den Kontaktflächen 14 der unteren Halbschale 2 jeweils zugeordnete Dichtelement 17 weist einen gegenüber dem Dichtelement 17, welches den Kontaktflächen 13 der oberen Halbschale 1 zugeordnet ist, kleineren Umriss auf. Dadurch wirkt das der oberen Halbschale 1 zugeordnete Dichtelement 17 als äußeres Dichtelement 17 und das der unteren Halbschale 2 zugeordnete Dichtelement 17 als inneres Dichtelement 17. Da die eine Längsseite 18 des den Kontaktflächen 13 der oberen Halbschale 1 zugeordneten äußeren Dichtelements 17 sehr nahe entlang der Laschenbohrung 15 verläuft, weist das den Kontaktflächen 14 der unteren Halbschale 2 zugeordnete innere Dichtelement 17 im Bereich der Laschenbohrung 5 eine die Laschenbohrung in der Art eines Bogens oder Halbkreises umgebende Ausbuchtung 19 auf.

Aus den Fig. 3 und Fig. 3 ist erkennbar, dass die Dichtelemente 17 aufgrund ihrer unterschiedlichen Größe nach Art von Schloss und Schlüssel ineinander greifen. Werden die obere Halbschale 1 und die untere Halbschale 2 nämlich in Montagerichtung 7 aufeinander gepresst, liegen die auf den Kontaktflächen 14 der unteren Halbschale 2 aufgespritzten inneren Dichtelemente 17 vollständig im in sich geschlossenen Linienzug der äußeren, auf die Kontaktflächen 13 der oberen Halbschale 1 aufgespritzten und rechteckförmigen Dichtelemente 17 ein. Beim Verspannen der Halbschalen 1,2 durch das Einschrauben der Befestigungsschrauben 6 in Gegengewinde 8 werden beide Dichtelemente 17 verformt. Durch ihre Lage nebeneinander bzw. ineinander überlappen die Dichtelemente 17 einander nicht. Vielmehr breiten sie sich in unterschiedliche Richtungen aus, bilden insgesamt eine homogene, dünne Dichtschicht und verschließen so die zwischen den Halbschalen 1,2 gebildete Trennfuge 12 flüssigkeits- bzw. dampfdicht.

### Bezugszeichenliste

- 1: obere Halbschale
- 2: untere Halbschale
- 3: Metallbügel
- 4: Montagelasche
- 5: Laschenbohrung
- 6: Befestigungsschraube
- 7: Montagerichtung
- 8: Gegengewinde
- 9: Einführtrichter
- 10: Befestigungsgewinde
- 11: Blindbohrung
- 12: Trennfuge
- 13: Kontaktfläche
- 14: Kontaktfläche
- 15: Querrichtung
- 16: Längsrichtung
- 17: Dichtelement
- 18: Längsseite
- 19: Ausbuchtung

## Patentansprüche

1. Rohrschelle mit einem aus zwei Halbschalen (1,2) gebildeten Ringkörper mit zwei Kontaktflächen (13,14) an jeder der beiden Halbschalen (1,2) derart, dass im Montageendzustand die einander zugewandten Kontaktflächenpaare im Bereich der zwischen den Halbschalen (1,2) entstehenden Trennfuge (12) aneinander liegen,
**dadurch gekennzeichnet,**
**dass** jeweils mindestens eine Kontaktfläche (13,14) eines Kontaktflächenpaares ein verformbares Dichtelement (17) trägt.

2. Rohrschelle nach Anspruch 1,
**dadurch gekennzeichnet,**
**dass** alle Kontaktflächen (13,14) ein Dichtelement (17) tragen, wobei vorzugsweise die einander zugewandten Dichtelemente (17) eines Kontaktflächenpaares versetzt zueinander angeordnet sind.

3. Rohrschelle nach Anspruch 2,
**dadurch gekennzeichnet,**
**dass** die eine Kontaktfläche (13,14) eines Kontaktflächenpaares ein am Kontaktflächenrand angeordnetes äußeres Dichtelement (17) trägt und dass die andere Kontaktfläche des Kontaktflächenpaares eine im Mittenbereich der Kontaktfläche angeordnetes und im Montageendzustand vom äußeren Dichtelement (17) umgebenes inneres Dichtelement (17) trägt.

4. Rohrschelle nach einem der Ansprüche 1 bis 3,
**dadurch gekennzeichnet,**
**dass** das Dichtelement (17) durchgängig und einstückig ausgebildet ist.

5. Rohrschelle nach einem der Ansprüche 1 bis 4,
**dadurch gekennzeichnet,**
**dass** die Dichtelemente (17) aus Polyurethan-Dichtschaum bestehen.

6. Rohrschelle nach einem der Ansprüche 1 bis 5,
**dadurch gekennzeichnet,**
**dass** die beiden Halbschalen (1,2) aus thermisch isolierendem Material, vorzugsweise Polyurethan-Hartschaum, bestehen.

7. Rohrschelle nach einem der Ansprüche 1 bis 6,
**dadurch gekennzeichnet,**
**dass** jede Halbschale (1,2) von einem nach Art eines Skeletts wirksamen Metallbügel (3) ausgesteift ist und dass die Metallbügel (3) vorzugsweise Beschlagteile zur Anbringung von Befestigungselementen aufweisen.

8. Rohrschelle nach einem der Ansprüche 1 bis 7,
**dadurch gekennzeichnet,**
**dass** zur Verbindung der Rohrschelle mit einer Schellenhalterung ein zweistufiges Befestigungsgewinde (10) in eine der Halbschalen (1,2) eingefräst ist, wobei die zweite tieferliegende Stufe einen kleineren Radius aufweist.

9. Rohrschelle nach einem der Ansprüche 1 bis 8,
**dadurch gekennzeichnet,**
**dass** die zur Verbindung der beiden Halbschalen (1,2) verwendeten Befestigungsschrauben (6) im Montageendzustand in den Halbschalen (1,2) versenkt angeordnet sind.
